# EUROPÄISCHE PATENTSCHRIFT

(11) **EP 3 786 747 B1**
(45) Veröffentlichungstag und Bekanntmachung des Hinweises auf die Patenterteilung: **22.06.2022**
(21) Anmeldenummer: 19194242.4
(22) Anmeldetag: 29.08.2019
(51) Int. Cl.: G05B 23/02

(54) **VERFAHREN ZUM ÜBERWACHEN EINER BETRIEBSMÄSSIGEN FUNKTIONSWEISE EINES ANLAGEN-STEUERSYSTEM**
METHOD FOR MONITORING THE OPERATIONAL FUNCTIONALITY OF A SYSTEM CONTROL SYSTEM
PROCÉDÉ DE SURVEILLANCE DU FONCTIONNEMENT DANS LES CONDITIONS D'EXPLOITATION D'UN SYSTÈME DE COMMANDE DE L'INSTALLATION

(43) Veröffentlichungstag der Anmeldung: 03.03.2021
(73) Patentinhaber: Siemens Aktiengesellschaft, 80333 München (DE)
(72) Erfinder: Schweigert, Harald, 1120 Wien (AT)
(74) Vertreter: Maier, Daniel Oliver

(56) Entgegenhaltungen:
- EP-A2- 2 093 504
- DE-T5-112017 000 687

## Beschreibung

### Technisches Gebiet

Die gegenständliche Erfindung betrifft allgemein das Gebiet der Elektrotechnik, insbesondere den Bereich der Leistungselektronik sowie leistungselektronischer Schaltungen. Im Speziellen bezieht sich die vorliegende Erfindung auf ein Verfahren zum Überwachen einer betriebsmäßigen Funktionsweise eines Steuersystems einer Anlage. Das Steuersystem umfasst neben zumindest zwei Lastkreisen zumindest eine Steuereinheit sowie eine getaktete Stromversorgung. Von der getakteten Stromversorgung werden die zumindest zwei Lastkreise, welche jeweils zumindest eine Lasteinheit (z.B. Sensor, Aktor, Relais, Schütz, Magnetventil, Stellmotor, etc.) aufweisen, über zumindest zwei Ausgangskanäle, an welchen jeweils ein Lastkreis angebunden ist, mit einer Versorgungsspannung und/oder einem Versorgungsstrom versorgt. Vom Steuersystem der Anlage werden während der betriebsmäßigen Funktionsweise unterschiedliche Betriebszustände angenommen, wobei ein Betriebszustand durch eine vorgebbare Kombination von Ausgangssignalen der Steuereinheit herbeigeführt wird.

### Stand der Technik

Heutzutage kommen in vielen Bereichen, wie z.B. in der industriellen Produktion und Fertigung, in der Energieerzeugung und -verteilung, in der Automatisierungstechnik, im Gebäudemanagement, etc., komplexe Maschinen und/oder Anlagen zum Einsatz. Als Anlage wird dabei eine planvolle Zusammenstellung von in räumlichen Zusammenhang stehenden und funktional, steuerungstechnisch und/oder sicherheitstechnisch miteinander verknüpften Komponenten (z.B. Maschinen, Geräten und/oder Apparaten) verstanden. Derartige technische Anlagen, wie beispielsweise Produktionsanlagen, Fertigungsanlage, Energieerzeugungs- und Energieverteilungsanlagen, etc., bzw. deren Komponenten weisen eine zunehmende Komplexität auf. Für einen effizienten Betrieb von technischen Anlagen und komplexen Maschinen werden daher üblicherweise Steuerungssysteme eingesetzt, bei welchen von Sensor- oder Messeinheiten Betriebsoder Prozessparameterwerte der Anlage oder Maschine gemessen werden. In Abhängigkeit von den gemessenen Betriebs- oder Prozessparameterwerten werden Aktoreinheiten oder andere Lasteinheiten (z.B. Schütze, Magnetventile, optische oder akustische Warnsignale, Motoreinheiten, Anzeigeeinheiten, etc.) mittels Ausgangssignalen des Steuersystems angesteuert, um z.B. Betriebs- oder Prozessparameter der Anlage bzw. Maschine zu verändern. Durch das Steuersystem soll der Betrieb der Maschine bzw. der Anlage möglichst selbständig und unabhängig von menschlichen Eingriffen gemäß einer gewünschten, betriebsmäßigen Funktionsweise ablaufen.

Für die Auswertung der Messwerte von den Sensor- oder Messeinheiten sowie zum Ansteuern der Aktoreinheiten (z.B. Stellmotor, Warnsignal, Anzeigeeinheit, etc.) bzw. zum Schalten weiterer Lasteinheiten (z.B. Relais, Schütze, Magnetventile) weist das Steuersystem üblicherweise eine Steuereinheit auf. Von der Steuereinheit, welche z.B. als eine so genannte speicherprogrammierbare Steuerung oder SPS, als Mikrocontroller oder als Industrie-PC ausgeführt sein kann, werden für den laufenden und ordnungsgemäßen Betrieb der Anlage Ausgangssignale z. B in Form von digitalen Steuerbefehlen, von analogen Steuerbefehlen oder als Steuerbefehle über einen Datenverbindung (z.B. via das so genannte Process Field Network oder kurs Profinet, etc.) zur Verfügung gestellt. Mit Hilfe der Ausgangssignale der Steuereinheit können beispielsweise nach prozesstechnischen Erfordernissen verschiedene Lasteinheiten bzw. Aktoreinheiten angesteuert werden. So können z.B. Aktoreinheiten, z.B. Stellmotoren, Warnsignaleinrichtungen, Anzeigeeinheiten, etc. aktiviert bzw. gesteuert werden oder weitere Lasteinheiten, wie z.B. Schütze, Relais, Magnetventile, welche mittels eines Elektromagneten betätigt werden, etc., zu- oder weggeschaltet werden.

Ein vorgebbare Kombination von Ausgangssignalen der Steuereinheit - d.h. digitale, analoge und/oder Steuerbefehle, welche über Datenverbindung von der Steuereinheit ausgesendet werden - kann beispielsweise einen Betriebszustand des Steuersystems bzw. der Anlage oder Maschine herbeiführen. Der Betriebszustand stellt einen Betriebsfall der Anlage bzw. Maschine dar, welcher von der Steuereinheit mittels Ausgabe bestimmter Ausgangssignale definiert wird und wodurch die Lasteinheiten in den Lastkreisen entsprechend geschalten werden. D.h. bedingt durch Erfordernisse während des Betriebs der Anlage bzw. Maschine werden von der Steuereinheit Kombinationen von Ausgangssignalen, an die Lasteinheiten ausgesendet, wobei diese Kombinationen z.B. über ein in der Steuereinheit ablaufendes Steuerprogramm vorgebbar sein können. Durch die Ausgangssignale werden die jeweiligen Lasteinheiten (z.B. Aktor, Relais, Schütz, Magnetventil, Stellmotor, etc.) entsprechend angesteuert - d.h. zu- oder weggeschaltet bzw. aktiviert oder deaktiviert. Ein Betriebszustand kann damit wiederholt - d.h. bei Anwendung derselben Kombination von Ausgangssignalen auf die Lasteinheiten in den Lastkreisen von der Steuereinheit immer wieder hervorgerufen werden.

Weiterhin weist ein derartiges Steuersystem zumindest eine getaktete Stromversorgung (wie z.B. ein Schaltnetzteil) auf, durch welche eine unstabilisierte Eingangsspannung - meist eine Wechselspannung - in eine konstante Ausgangsspannung - meist eine Gleichspannung (z.B. 24 Volt) - zur Versorgung der Lasteinheiten des Steuersystems umgewandelt wird. Eine derartige Stromversorgung - wie z.B. die SITOP PSU8600 der Firma Siemens - kann beispielsweise zumindest zwei oder mehrere Ausgänge zum direkten Anschließen von Lastkreisen aufweisen, wobei diese Ausgänge als Ausgangskanäle genutzt werden, über welche die Lastkreise und damit die Lasteinheiten des Steuersystems mit Strom bzw. Spannung versorgt werden.

Alternativ kann eine getaktete Stromversorgung eingesetzt werden, an welche beispielsweise über einen Ausgang der Stromversorgung eine Baugruppe (z.B. schaltbare Sicherungseinheit, etc.) geschaltet werden kann. Von dieser Baugruppe werden dann z.B. zumindest zwei getrennt schaltbare Ausgangszweige als Ausgangskanäle zur Verfügung gestellt. An jeden der Ausgangskanäle kann ein Lastkreis mit zumindest einer Last bzw. Lasteinheit oder mit einer Gruppe von Lasteinheiten angeschlossen werden. Die Last bzw. der Lastkreis wird dann über den jeweiligen Ausgangskanal mit einer Versorgungsspannung (z.B. 24 Volt) und/oder einem Versorgungsstrom versorgt, welche von der getakteten Stromversorgung zur Verfügung gestellt wird.

Für die Ansteuerung der Ausgangskanäle - d.h. für ein Ein- bzw. Ausschalten der Spannungs- und/oder Stromversorgung eines Lastkreises - können ebenfalls Ausgangssignale von der Steuereinheit genutzt werden. Weiterhin kann beispielsweise die Versorgungsspannung oder der Versorgungsstrom in den Ausgangskanälen (d.h. die Versorgungsspannung oder den Versorgungsstrom für den jeweils angeschlossenen Lastkreis) von der Steuereinheit beeinflusst werden. Für eine Übertragung der entsprechenden Ausgangssignale und/oder Steuerbefehle zwischen der Steuereinheit und den Ausgangskanälen kann beispielsweise eine Datenschnittstelle vorgesehen sein. Für diese Datenschnittstelle kann beispielsweise der offene Industrie-Ethernet-Standard PROFIBUS-Nutzerorganisation Profinet (Process Field Network) verwendet werden. Alternativ kann die Steuereinheit die getaktete Stromversorgung und/oder die Ausgangskanäle beispielsweise auch über analoge Sollwerte ansteuern, welche für die Ausgangskanäle vorgegeben werden.

Bei einer Stromversorgung mit zumindest zwei Ausgangskanälen (wie z.B. bei der SITOP PSU8600) kann beispielsweise Spannung und Strom für jeden Ausgangskanal individuell (z.B. über Ausgangssignale der Steuereinheit) eingestellt und überwacht werden. Damit kann z.B. bei jedem Ausgangskanal der jeweils aktuelle Versorgungs- bzw. Laststrom sowie die aktuelle Versorgungsspannung für den jeweils angeschlossenen Lastkreis gemessen und überwacht werden. Ebenso können der jeweilige Versorgungs- bzw. Laststrom sowie die Versorgungsspannung für über Ausgangszweige einer zusätzlichen Baugruppe angeschlossene Lastkreise gemessen und überwacht werden. Damit kann beispielsweise ein Stromverbrauch und eine für die Versorgung notwendige Spannung für den jeweiligen Lastkreis ermittelt werden, wobei sich der Stromverbrauch und die Spannung im jeweiligen Lastkreis durch Steuer- und Schalthandlungen der Steuereinheit des Steuersystems verändern kann. D.h. durch Aktivieren bzw. Deaktivieren von Aktoreinheiten (z.B. Einschalten einer Lichtsignaleinheit, Warneinrichtung, etc., Verändern einer Motordrehzahl, etc.) und/oder eine Zu- und Wegschalten von weiteren Lasteinheiten (wie z.B. Schützen oder Magnetventilen, etc.) entsprechend den Erfordernissen des laufen Betriebs - d.h. durch eine Änderung des Betriebszustands in der Anlage oder Maschine - kann sich der jeweilige Stromverbrauch sowie die Spannung im jeweiligen Lastkreis verändern.

Ist nach einem Aufstellen, Erweitern, etc. eine Anlage bzw. komplexe Maschine in Betrieb gegangen und können beispielsweise Fehler, welche aufgrund der Montage und/oder Erweiterung auftreten können (z.B. Fehler bei der Verdrahtung der Lasteinheiten, etc.) ausgeschlossen werden, so ist es wichtig, dass ein reibungsloser, sicherer und der Funktion entsprechender Betrieb der Anlage bzw. Maschine gewährleistet wird und dass sich anbahnende Fehlfunktionen bzw. auftretende Fehler rasch erkannt und lokalisiert werden können.

Eine Möglichkeit ist beispielsweise die einzelnen Lastkreise des Steuersystems bzw. der Anlage mit mechanischen und/oder elektronischen Sicherungseinheiten zu versehen. Tritt dann in einem Lastkreis z.B. eine Überlast auf, so wird der Lastkreis durch die Sicherungseinheit abgeschaltet. Eine Fehlersuche kann dann z.B. auf den abgeschalteten Lastkreis des Steuersystems beschränkt werden. Diese Vorgehensweise bietet aber nur eine sehr grobe Möglichkeit für eine Auswertung und Lokalisierung von Fehler, welche im laufenden Betrieb auftreten können, wie z.B. Ausfall einer Lasteinheit, durchgescheuerte Leitungen, etc. Sich anbahnende Fehlfunktionen (z.B. durch Alterung von Lasteinheiten, durch beschädigte Leitungen, durch kurzgeschlossene Leitungen, etc.) der Anlage oder Maschine können beispielsweise durch einen Einsatz von Sicherungseinheiten kaum bis gar nicht erkannt werden.

Weiterhin gibt heutzutage beispielsweise Ansätze, um sich ankündigende bzw. anbahnenden Fehlfunktionen von Anlagen- oder Maschinenkomponenten im Vorhinein mit relativ hoher Wahrscheinlichkeit vorhersagen zu können. Diese Ansätze beschränkten sich allerdings meist auf mechanische Komponenten von Anlagen bzw. Maschinen, wie z.B. Kugellager. Dabei kann z.B. vom Hersteller bereits angegeben werden, welche akustisch messbaren Geräuschfrequenzen oder mittels Vibrationsaufnehmern erkennbaren Frequenzen bestimmten Teilen (z.B. Lagerschild, äußerer Ring, innerer Ring, Kugeln, etc.) der mechanischen Komponenten, wie z.B. dem Kugellager, zugeordnet werden können. Diese Werte sind z.B. auf eine Nenndrehzahl bezogen und können entsprechend auf eine aktuell erfasste Drehzahl umgerechnet werden. Durch Bestimmen aktueller Geräusch- und/oder Vibrationsfrequenzen bzw. einer zugehörigen Amplitude können dann beispielsweise Veränderungen und auch der jeweils dafür verantwortliche Teil der mechanischen Komponente bzw. des Kugellagers ermittelt werden. D.h. ein Schaden bzw. ein Ausfall einer mechanischen Komponente, wie z.B. eines Kugellagers kann rechtzeitig erkannt und behoben werden. Ähnliche Ansätze für elektrische und/oder elektronische Komponenten einer Anlage oder Maschine, wie z.B. Sensoreinheiten, Aktoreinheiten, Relais, Schütze, Magnetventile, etc., welche insbesondere Steuersystemen in Anlagen bzw. komplexen Maschinen eingesetzt werden, sind kaum bekannt.

Es ist allerdings z.B. mit dem REX-System der Firma E-T-A Elektrotechnische Apparate GmbH ein modular aufgebautes Stromverteilungs- und Sicherungssystem für eine zentrale Überwachung von dezentral aufgebauten Anlagen bekannt. Dieses System umfasst zumindest ein Einspeisemodul zur Anbindung an eine getaktete Stromversorgung sowie zumindest ein Sicherungsmodul mit einem oder zwei Kanälen zur Anbindung und Absicherung eines Lastkreises. Über das Einspeisemodul können beispielsweise dynamische Anlageninformationen und Messwerte (z.B. aktuelle Spannungs- und Stromwerte in Lastkreisen, welche über ein oder mehrere Sicherungsmodulen angeschlossen sind, Auslösegrund eines Sicherungsmoduls, etc.) ermittelt und über eine Datenverbindung von einer übergeordneten Steuereinheit ausgelesen werden. Weiterhin kann z.B. bei den Sicherungsmodulen ein Nennstrom sowie ein Grenzwert für einen jeweiligen Stromwert im Lastkreis eingestellt werden. Damit können mit Hilfe dieses Stromverteilungs- und Sicherungssystems zwar extreme Defekte - wie z.B. Kurzschlüsse in der Verdrahtung eines Lastkreises, Kurzschlüsse oder Überströme in einem Lastkreis, etc. - insbesondere im laufende Betrieb einer Anlage festgestellt werden. Sich anbahnende Fehler oder Fehlfunktionen von Lasteinheiten, welche den laufenden Betrieb der Anlage bzw. Maschine zwar einschränken, aber nicht be- oder verhindern, oder Fehler, welche zu lediglich geringen Überströmen oder Stromabsenkungen gegenüber einem Sollzustand führen, sind mit diesem System nur sehr schwer bis kaum erkennbar. D.h. derartige Fehler bzw. Fehlfunktionen bleiben beispielsweise bis zum Ausfall oder eine Schädigung einer Lasteinheit, etc. meist unentdeckt. Weiterhin kann das System außerdem aufgrund des modularen Aufbaus zu erhöhtem Aufwand und Kosten z.B. bei Anlagenplanung und Wartung führen.

### Darstellung der Erfindung

Der Erfindung liegt daher die Aufgabe zugrunde, ein Verfahren zum Überwachen einer betriebsmäßigen Funktionsweise eines Steuersystem sowie der zugehörigen Lastkreise einer Anlage anzugeben, durch welches auf einfache Weise Fehlfunktionen sowie sich anbahnende Fehler und/oder Ausfälle von Lasteinheiten und/oder deren Zuleitungen in Lastkreisen frühzeitig erkannt werden können.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zum Überwachen einer betriebsmäßigen Funktionsweise eines Steuersystems einer Anlage der eingangs angeführten Art, wobei das Steuersystem neben zumindest zwei Lastkreisen, welche jeweils zumindest eine Lasteinheit bzw. einen Verbraucher (z.B. Schütz, Magnetventil, Sensoreinheit, Aktoreinheit, etc.) aufweisen, zumindest eine Steuereinheit sowie eine getaktete Stromversorgung umfasst. Von der getakteten Stromversorgung werden die zumindest zwei Lastkreise mit jeweils zumindest einer Lasteinheit über zumindest zwei Ausgangskanäle mit einer Versorgungsspannung und/oder einem Versorgungsstrom versorgt, wobei die zumindest zwei Ausgangskanäle als zumindest zwei direkte Ausgänge der Stromversorgung oder als von zumindest zwei Ausgangszweige einer an die Stromversorgung angeschalteten Baugruppe ausgestaltet sein können. Weiterhin werden vom Steuersystem während einer betriebsmäßigen Funktionsweise der Anlage unterschiedliche Betriebszustände angenommen, wobei ein Betriebszustand durch eine vorgebbare Kombination von Ausgangssignalen der Steuereinheit herbeigeführt wird. Dabei umfasst das erfindungsgemäße Verfahren zumindest die folgenden Schritte:
- Feststellen einer Änderung des Betriebszustands des Steuersystems der Anlage;
- Messen der jeweils aktuellen Strom- und/oder Spannungswerte an den zumindest zwei Ausgangskanälen für die jeweils zugehörigen Lastkreise;
- Abspeichern der aktuellen Strom- und/oder Spannungsmesswerte gemeinsam mit dem jeweiligen Betriebszustand des Steuersystems;
- Vergleichen der aktuellen Strom- und/oder Spannungsmesswerte mit Strom- und/oder Spannungswerten zumindest einer vorangegangenen Messung, wobei der jeweilige Betriebszustand der Strom- und/oder Spannungswerte der zumindest einen vorangegangenen Messung eine Übereinstimmung mit dem jeweiligen Betriebszustand der aktuellen Strom- und/oder Spannungsmesswerte aufweist - d.h. es werden aus den abgespeicherten Daten vorangegangener Messungen an den jeweiligen Ausgangskanälen zur Stromversorgung der Lastkreise jene Strom- und/oder Spannungswerte ermittelt, welche bei einem Betriebszustand gemessen wurden, welcher mit dem jeweiligen Betriebszustand der aktuellen Strom- und/oder Spannungsmesswerte zumindest weitgehend übereinstimmt bzw. eine idente, fast idente, gleichartige oder ähnliche Kombination an Ausgangssignalen der Steuereinheit aufweist;
- Prüfen, ob vom Vergleich der aktuellen Strom- und/oder Spannungsmesswerte mit den Strom- und/oder Spannungswerten der zumindest einen vorangegangenen Messung ein vorgegebener Toleranzbereich verlassen wird;
- und Anzeigen des jeweiligen Lastkreises, bei welchem im jeweiligen Betriebszustand der aktuellen Strom- und/oder Spannungsmesswerte der vorgegebene Toleranzbereich verlassen wird.

Der Hauptaspekt der erfindungsgemäß vorgeschlagenen Lösung besteht darin, dass damit die Möglichkeit besteht, auf einfache Weise Fehlfunktionen in Lastkreisen und/oder sich anbahnende Fehler bzw. Ausfälle von Lasteinheiten, deren Zuleitungen, etc. frühzeitig erkennen und entsprechend rasch lokalisieren zu können. Dazu werden für durchlaufene Betriebszustände (d.h. für die jeweils von der Steuereinheit hervorgerufenen Ausgangssignalkombinationen) die jeweiligen Stromund/oder Spannungsmesswerte an den Ausgangskanälen gemessen und dann abgespeichert, wobei an den Ausgangskanälen die Lastkreise mit den jeweiligen Lasteinheiten (z.B. Sensor, Aktor, Schütze, Relais, Magnetventile, etc.) angebunden sind. Aktuelle Messwerte von Strom und Spannung werden dann mit Messwerten von vorangegangenen Messungen verglichen, wobei jene Messungen von Strom- und/oder Spannungswerten herausgefiltert werden, welche bei einem gleichartigen oder ähnlichem Betriebszustand gemessen wurden, der mit der aktuellen Situation bzw. dem aktuellen Betriebszustand am bestem vergleichbar ist. Idealerweise werden in den vorangegangenen Messungen Strom- und/oder Spannungswerte gefunden, welche beim selben Betriebszustand - d.h. bei derselben Kombination von Ausgangssignalen der Steuereinheit - gemessen wurden.

Um Abweichungen und/oder Veränderungen festzustellen, werden nun für den jeweiligen Betriebszustand die Strom- und/oder Spannungswerte vorangegangener Messungen mit den aktuellen Messwerten verglichen. Durch den vorgegebenen Toleranzbereich können wesentliche bzw. signifikante Abweichungen z.B. beim Stromverbrauch oder bei den Spannungswerten erkannt werden, welche an den Ausgangskanälen bzw. für die jeweiligen Lastkreise gemessen wurden. Auf diese einfache Weise kann der Betreiber der Anlage oder Maschine Hinweise erhalten, welcher Lastkreis, Lasteinheit, Lastgruppen, etc. eventuell nicht betriebsmäßig funktioniert und diese gegebenenfalls überprüfen, um beispielsweise sich anbahnende Fehler z.B. aufgrund von Alterung einzelner Lasteinheiten, etc. rechtzeitig beheben zu können.

Ein vorteilhafte Fortbildung des erfindungsgemäßen Verfahrens sieht vor, dass zusätzlich zu den aktuellen Strom- und/oder Spannungsmesswerten des jeweiligen Betriebszustandes jeweils aktuelle Werte von Parametern und/oder Signalen an Signaleingängen der Steuereinheit und/oder aktuelle Werte von Umgebungs- und Anlagenparametern erfasst und abgespeichert werden. Liegen beispielsweise viele vorangegangenen Messungen von Strom- und/oder Spannungswerten für den jeweiligen Betriebszustand vor, mit welchen die aktuell gemessenen Stromund/oder Spannungsmesswerte verglichen werden können, so können die zusätzlichen Parameter- und Signalwerte an den Signaleingängen der Steuereinheit (z.B. Werte von Temperatursensor, Drucksensoren, Drehzahlmessern, etc., Funktionssignale von Näherungssensoren, Lichtsignalen, Alarmsignalen, etc.) und/oder die aktuellen Werte von Umgebungs- und Anlagenparameter (z.B. Temperaturwerte, Druckwerte, Drehzahlwerte, etc.) für eine weitere Filterung der Vergleichsdaten, welche bei vorangegangenen Messungen ermittelt wurden, genutzt werden. Durch die Berücksichtigung dieser so genannten Sekundärparameter - d.h. der Parameter und/oder Signale der Signaleingänge der Steuereinheit und gegebenenfalls von Umgebungs- und weiteren Anlagenparameter - wird der Vergleich der aktuellen Messdaten von Strom und Spannung für den jeweiligen Betriebszustand idealerweise nur mit jenen Daten von vorangegangenen Messungen durchgeführt, welche bei annähernd ähnlichen Bedingungen ermittelt wurden. Eine Anzeige von betriebsmäßig funktionierenden Lastkreisen als fehlerhaft oder Fehlalarme werden dadurch idealerweise reduziert, da Unterschiede in den Strom- und Spannungsmesswerten, welche z.B. durch Fremdeinflüsse (z.B. Temperatur, etc.) verursacht sein können, minimiert werden.

Es ist weiterhin günstig, wenn für eine Bewertung der Übereinstimmung zwischen dem jeweiligen Betriebszustand der aktuellen Strom- und/oder Spannungsmesswerte und dem Betriebszustand der Strom- und/oder Spannungswerte zumindest einer vorangegangenen Messung eine maximal zulässige Abweichung vorgegeben wird. Auf diese einfache Weise wird sichergestellt, dass für den Vergleich der aktuellen Strom- und/oder Spannungsmesswerte Strom- und/oder Spannungswerte von vorangegangenen Messungen herangezogen werden, welche bei Betriebszuständen gemessen wurden, welche mit dem Betriebszustand weitgehend übereinstimmen, bei welchem die aktuellen Messwerte ermittelt wurden. Nur bei einer hohen Übereinstimmung der Betriebszustände und gegebenenfalls der Sekundärparameter, bei welchen die jeweiligen Messwerte entstanden sind, können Fehlfunktionen und/oder sich anbahnende Fehler in Lastkreisen mit hoher Wahrscheinlichkeit erkannt werden. Weiterhin kann bei komplexen, großen Anlagen und/oder Maschinen (z.B. in der Prozessindustrie) ein Betriebszustand durch eine Vielzahl an Ausgangssignale der Steuereinheit definiert werden. Bei derartigen Anlagen bzw. zugehörigen Steuersystemen kann es sinnvoll sein, eine maximal zulässige Abweichung bei der Bewertung der Übereinstimmung von Betriebszuständen zuzulassen, um eine entsprechende Anzahl von Vergleichswerten zu erhalten.

In vorteilhafter Weise kann der vorgegebene Toleranzbereich für den Vergleich der aktuellen Strom- und/oder Spannungsmesswerte mit den Strom- und/oder Spannungswerten zumindest einer vorangegangenen Messung beim jeweiligen Betriebszustand angepasst werden. Durch die Einstellbarkeit des Toleranzbereichs können idealerweise Schwankungen bei der Stromund/oder Spannungsmessung oder auch leichte Driften kompensiert werden, um z.B. unnötige Alarme bzw. Fehlalarme zu verhindern. Durch regelmäßiges Durchführen des erfindungsgemäßen Verfahrens können beispielsweise typische Schwankungen in Lastkreisen der Anlage bzw. Maschine erkannt und der Toleranzbereich entsprechend angepasst werden, um z.B. Pseudofehler durch einen zu eng gewählten Toleranzbereich bzw. das Übersehen von Fehlern und/oder Fehlfunktionen in Lastkreisen durch einen zu breit gewählten Toleranzbereich zu vermeiden.

Der vorgegebene Toleranzbereich kann beispielsweise in Form eines Prozentsatzes oder in Form eines Absolutbereichs angegebenen werden. Auch eine Kombination von beidem ist möglich. Weiterhin kann ein Toleranzbereich für alle zu überprüfenden Messwerte vorgegeben werden oder es können auch für die jeweiligen Messwerte (z.B. für Strom- und Spannungswerte) spezifische oder Lastkreis-spezifische Toleranzbereiche vorgegeben werden.

Zweckmäßigerweise wird nach Feststellen der Änderung des Betriebszustands vor der Messung der jeweils aktuellen Stromund/oder Spannungswerte an den zumindest zwei Ausgangskanälen eine vorgebbare Wartezeit eingehalten. Auf diese einfache Weise können beispielsweise Einflüsse von Schwankungen im Stromverbrauch bzw. bei der Spannung z.B. aufgrund der Änderung des Betriebszustandes auf die Messung des jeweils aktuellen Messwertes von Strom oder Spannung möglichst eliminiert werden. Derartige Schwankungen können beispielsweise aufgrund von Schaltvorgängen bei Lasteinheiten (z.B. An- oder Wegschalten einer Lasteinheit, Verändern einer Stellgröße bei einem Aktor, Einschwingphasen bei thermischen Widerständen, etc.) ausgelöst werden, welche aufgrund der Veränderung des Betriebszustands vorgenommen werden.

Eventuell kann die Veränderung des Betriebszustands auch zu einem Anschalten bzw. einer Änderung der Versorgungsspannung oder des Versorgungsstroms in einem Lastkreis bzw. bei einem Ausgangskanal führen und damit Schwankungen auslösen, welche zu falschen Messwerten von Strom und/oder Spannung führen können. Die vorgebbare Wartezeit kann beispielweise derart gewählt werden, dass für die Messung der Stromwerte am jeweiligen Ausgangskanal ein stabiler Stromwert erreicht wurde, welcher z.B. eine relative geringe Schwankung (z.B. 3% Abweichung in einer Sekunde) aufweist. Ein Vorgabewert für die vorgebbare Wartezeit kann z.B. aus vorangegangenen Messungen z.B. anhand einer graphischen Darstellung eines zeitlichen Verlaufs der Messwerte abgeleitet werden. Damit lassen sich z.B. Wartezeiten bei Lasteinheiten bzw. Lastkreisen ohne nennenswerte Einschwingzeit auf ein Minimum reduzieren. Bei Lasteinheiten mit relativ großen Einschwingzeiten kann beispielsweise zur vorgebbaren Wartezeit noch eine Sicherheitsreserve vorgesehen werden, um stabile Messwerte zu erhalten.

Weiterhin kann es sinnvoll sein, wenn z.B. anstatt aktueller Strom- und/oder Spannungsmesswerte für einzelne Betriebszustände zu bestimmen, Strom- und/oder Spannungsmesswerte für zeitliche Folgen bzw. Sequenzen von mehreren einzelnen Betriebszuständen bestimmt werden und für einen Vergleich mit Strom- und/Spannungswerten früherer Messungen herangezogen werden. Es kann beispielsweise vorkommen, dass sich ein Betriebszustand ändert, ehe ein Einschwingvorgang zumindest einer Lasteinheit bzw. eines Verbrauchers abgeschlossen ist. D.h., von der Steuereinheit wird z.B. an einer anderen Stelle der Anlage bzw. Maschine eine Änderung vorgenommen, während ein über längere Zeit dauernder Einschwingvorgang eines Verbrauchers bzw. einer Lasteinheit noch nicht abgeschlossen ist und wobei diese Lasteinheit bei dieser Änderung des Betriebszustands weiterhin eingeschaltet bleibt. Durch die Messung und dem Vergleich von Betriebszustandssequenzen können z.B. entsprechende Fehlalarme verhindert bzw. reduziert werden.

Zusätzlich oder alternativ, ist es insbesondere für die Messung der aktuellen Stromwerte auch denkbar, dass nach Feststellen der Änderung des Betriebszustand der jeweils aktuelle Stromwert, welcher jeweils an den zumindest zwei Ausgangskanälen ermittelt werden soll, in vorgebbaren Abständen innerhalb eines vorgebbaren Zeitraums gemessen wird, und dass aus den im vorgebbaren Zeitraum gemessenen Stromwerten ein Mittelwert als aktueller Strommesswert für den jeweiligen Betriebszustand gebildet wird. D.h. der aktuelle Strommesswert für den jeweils aktuellen Betriebszustand wird als Mittelwert aus mehreren Stromwerten gebildet, welche über einen vorgebbaren Zeitraum bzw. Integrationszeit (z.B. 0,1 Sekunde, 10 Sekunden, etc.) gemessen werden. Alternativ kann eine andere Art mathematischer Filterung vorgesehen werden, um eine Reduktion des Einflusses von Stromverbrauchsschwankungen - insbesondere bei Änderungen der Versorgungsspannung oder aufgrund von Schaltvorgängen durch die Änderung des Betriebszustands - im Lastkreis bzw. ein Rauschen bei der Ermittlung der Strommesswerte zu reduzieren.

Es ist auch vorteilhaft, wenn die Strom- und/oder Spannungswerte der zumindest einen vorangegangenen Messung an derselben Anlage bzw. am selben Steuersystem gemessen werden, wie die aktuellen Strom- und/oder Spannungsmesswerte. Damit kann sichergestellt werden, dass die Messdaten verschiedener Messungen weitgehend unter gleichen bzw. ähnlichen Bedingungen ermittelt werden. Diese Vorgehensweise kann z.B. bei Anlagen und Maschinen angewendet werden, welche als Unikate bzw. betreiberspezifisch hergestellt oder angepasst wurden.

Alternativ können die Strom- und/oder Spannungswerte der zumindest einen vorangegangenen Messung auch auf einer bauartgleichen oder bauartähnlichen Anlage bzw. einem bauartgleichen oder bauartähnlichen Steuersystem gemessen werden. Diese Vorgehensweise kann beispielsweise bei in Serie gefertigten Anlagen und/oder Maschinen angewendet werden, welche z.B. ohne große betreiberspezifische Anpassungen zum Einsatz kommen. Insbesondere, wenn mehrere bauartgleiche oder bauartähnliche Anlagen bzw. Maschinen im Feld in Betrieb sind, kann auf diese Weise eine Vielzahl von Messdaten gesammelt werden. Sich anbahnende Fehler, Fehlerfunktionen und/oder sich verschlechternde Lasteinheiten in Lastkreisen bei einzelnen Anlagen und/oder Maschinen können damit früher sowie zielsicherer erkannt und gegebenenfalls Ausfälle verhindert werden.

Vorteilhafterweise können die gemessenen Strom- und/oder Spannungswerte mit den jeweils zugehörigen Betriebszuständen können in der Steuereinheit des Anlagen- bzw. Maschinen-Steuersystems hinterlegt werden. Damit kann das erfindungsgemäße Verfahren z.B. direkt von der Steuereinheit in Form einer Analyse- und Auswertefunktion durchgeführt werden, welche Auskunft über mögliche Fehlfunktionen, sich anbahnende Fehler, etc. in den Lastkreisen des Steuersystems der Anlage oder Maschine z.B. in Form von Alarmmeldungen liefert. Eine Auswertung der Messdaten von Strom und Spannung kann beispielsweise online - d.h. es werden laufend bei Betriebszustandsänderungen Messdaten erfasst und mit Daten von Strom und Spannung vorangegangener Messungen bei vergleichbaren bzw. übereinstimmenden Betriebszuständen auf auffällige Veränderungen verglichen. Alternativ kann die Auswertung der aktuellen Messdaten - d.h. der Vergleich mit Daten vorangegangener Messungen bei übereinstimmenden Betriebszuständen sowie die Überprüfung, ob der vorgegebene Toleranzbereich verlassen wird - auch zeitlich versetzt erfolgen.

Alternativ oder zusätzlich können die gemessenen Stromund/oder Spannungswerte mit den jeweils zugehörigen Betriebszuständen an eine Auswerte- und/oder Datenverarbeitungseinheit übertragen und dort abgespeichert werden. Die Messwerte können damit sehr einfach für die Überprüfung von mehreren bauartgleichen oder bauartähnlichen Anlagen bzw. Maschinen genutzt werden. Die Auswertung der aktuellen Messdaten kann beispielsweise wieder online oder zeitversetzt (d.h. offline) erfolgen. Die Speicherung der aktuellen Messwerte und insbesondere eine zeitversetzte Auswertung der Messwerte ermöglicht sehr einfach erweiterte Analyse- und Auswertemöglichkeiten. Es können z.B. Messergebnisse graphisch dargestellt oder zeitliche Entwicklungen in der Anlage bzw. Maschine beurteilt werden. Auf diese Weise können z.B. drohende Fehlfunktionen in Lastkreisen oder Veränderungen, welche zu Fehlfunktionen der Anlage oder Maschine führen können, zeitgerecht erkannt und gegebenenfalls behoben werden.

Eine vorteilhafte Fortbildung des erfindungsgemäßen Verfahrens sieht vor, dass vor einer Übertragung von aktuellen Strom- und/oder Spannungsmesswerten und dem jeweiligen zugehörigen Betriebszustand von der Steuereinheit ein Startsignal an die Auswerte- und/oder Datenverarbeitungseinheit gesendet wird. Von der Steuereinheit kann damit der Auswerte- und/oder Datenverarbeitungseinheit z.B. eine stabile Messung der aktuellen Strom- und Spannungswerte an den Ausgangskanälen nach Änderung des Betriebszustand sowie ein Beginn der Datenübertragung mitgeteilt werden. Insbesondere bei einer so genannten Online-Auswertung kann das Startsignal der Auswerteund/oder Datenverarbeitungseinheit auch den Start eines weiteren Auswertezyklus mitteilen. Idealerweise kann von der Auswerte- und/oder Datenverarbeitungseinheit ein Rücksignal an die Steuereinheit gesendet werden, wenn diese z.B. bereit für einen nächsten Auswertezyklus ist.

Idealerweise werden die Schritte des erfindungsgemäßen Verfahrens während des laufenden Betriebs der Anlage bzw. Maschine durchlaufen. Das heißt, während des Betriebs der Anlage bzw. Maschine werden für jede festgestellte Änderung des Betriebszustands die jeweils aktuellen Strom- und/oder Spannungsmesswerte bestimmt und gemeinsam mit dem jeweils aktuellen Betriebszustand abgespeichert, um dann online oder offline mit Strom- und/oder Spannungswerten von zumindest einer früheren Messung, welche einen gleichartigen oder zumindest ähnlichen Betriebszustand aufweist, verglichen zu werden. Die Anlage bzw. Maschine wird damit in vorteilhafter Weise laufend auf eventuell auftretenden Fehler bzw. drohende Fehlfunktionen in Lastkreisen oder Veränderungen, welche zu Fehlfunktionen der Anlage oder Maschine führen können, überwacht.

Alternativ oder zusätzlich, können die Schritte des Verfahrens auch in einer Testphase im Form eines Testprogramms ausgeführt werden. Dabei werden beispielsweise durch das Testprogramm von der Steuereinheit vorgegebene Betriebszustände hervorgerufen und zu diesen die jeweiligen aktuellen Stromund/oder Spannungsmesswerte gemessen und dann gemeinsam mit dem jeweils hervorgerufenen Betriebszustand abgespeichert. In der Folge können dann die aktuellen Strom- und/oder Spannungsmesswerte mit Strom- und/oder Spannungsmesswerten von früheren Messungen bei gleichartigen oder ähnlichen Betriebszuständen verglichen werden. Diese Strom- und/oder Spannungsmesswerte können beispielsweise von vorangegangenen Durchläufen des Testprogramms stammen. Es können aber auch Stromund/oder Spannungsmesswerte von Messungen herangezogen werden, welche während des laufenden Betriebs der Anlage bzw. Maschine durchgeführt wurden - sofern diese Betriebszustände aufweisen, welche mit den im Testprogramm vorgegebenen Betriebszuständen weitgehend übereinstimmen.

### Kurzbeschreibung der Zeichnung

Die Erfindung wird nachfolgend in beispielhafter Weise anhand der beigefügten Figuren erläutert. Es zeigen:
Figur 1 einen schematischen und beispielhaften Aufbau eines Steuersystems einer Anlage zur Durchführung des erfindungsgemäßen Verfahren zum Überwachen einer betriebsmäßigen Funktionsweise des Steuersystems einer Anlage
Figur 2 einen beispielhaften Ablauf des erfindungsgemäßen Verfahren zum Überwachen einer betriebsmäßigen Funktionsweise des Steuersystems einer Anlage.

### Ausführung der Erfindung

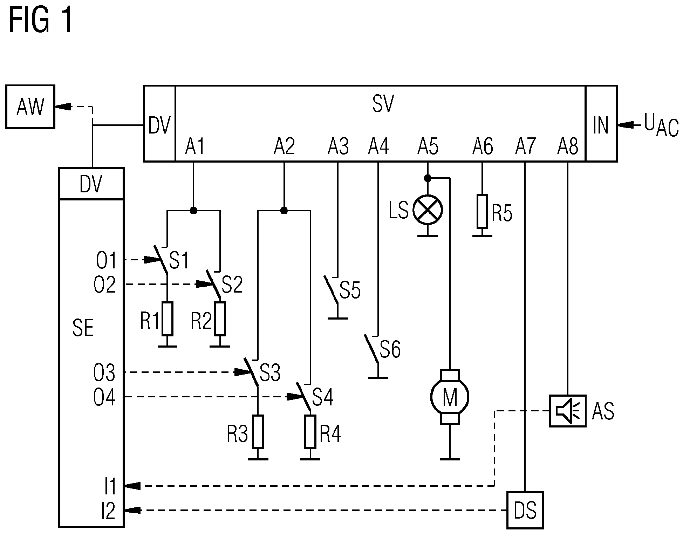

Figur 1 zeigt in schematischer Weise beispielhaft ein Steuersystem einer technischen Anlage bzw. einer komplexen Maschine. Das beispielhafte Steuersystem umfasst dabei zumindest eine Steuereinheit SE, welche z.B. als speicherprogrammierbare Steuerung oder kurz SPS ausgeführt sein kann. Alternativ kann auch ein Mikrocontroller oder eine Industrie-PC als Steuereinheit SE eingesetzt werden. Die Steuereinheit SE weist beispielsweise zur Ansteuerung von Lasteinheiten - z.B. zum Schalten von Schalteinheiten S1, ..., S4 - digitale Ausgänge 01, ..., 04 auf. Alternativ können die Schalteinheiten S1, ..., S4 auch Teil einer Ausgangsbaugruppe der Steuereinheit SE, insbesondere einer digitalen Ausgangsbaugruppe mit einer speicherprogrammierbaren Steuerung bzw. SPS sein. Alternativ oder zusätzlich kann die Steuereinheit SE auch analoge Ausgänge aufweisen, über welche z.B. Aktoreinheiten bzw. Schalteinheiten für eine Ansteuerung angebunden sein können. In Figur 1 sind der Einfachheit halber die analogen Ausgänge der Steuereinheit SE nicht explizit dargestellt. Die digitalen Ausgänge 01, ..., 04 sowie die analogen Ausgänge bieten der Steuereinheit SE die Möglichkeit, die Anlage bzw. Maschine vor allem während des Betriebs mittels Ausgangssignalen anzusteuern und zu regeln. Durch eine Kombination dieser Ausgangssignale, vor allem der an den digitalen Ausgängen 01, ..., 04 anliegenden Ausgangssignalen, wird im laufenden Betrieb ein Betriebszustand des Steuersystems und damit der Anlage herbeigeführt. Ein Betriebszustand stellt damit einen Betriebsfall des Steuersystems bzw. der Anlage oder Maschine dar, welcher von der Steuereinheit SE mittels Ausgabe vorgebbarer Ausgangssignale über die digitalen Ausgänge 01, ..., 04 und gegebenenfalls analogen Ausgänge vorgegeben wird. Ein Betriebszustand des Steuersystems bzw. der Anlage oder Maschine kann allerdings auch z.B. im Rahmen einer Testphase mittels eines Testprogramms durch Steuereinheit SE herbeigeführt werden, um z.B. die Anlage bzw. Maschine vor einer Inbetriebnahme bzw. einem Einsatz zu überprüfen.

Mittels der Ausgangssignale werden dann z.B. die Schalteinheiten S1, ..., S4 und damit zugehörigen Lasteinheiten R1, ..., R4 in den jeweiligen Lastkreisen entsprechend geschalten. Über analoge Ausgänge bzw. deren Ausgangssignale können weitere Lasteinheiten, wie z.B. Aktoreinheiten (z.B. Motoreinheiten, Lichtsignale, etc.), Schalteinheiten (z.B. Relais, Magnetventile, Schütze, etc.), etc., geschaltet und/oder angesteuert werden.

Zusätzlich kann zu den digitalen Ausgängen 01, ..., 04 und/oder analogen Ausgängen kann die Steuereinheit SE auch über ein Schnittstellenmodul DV für eine Datenverbindung Ausgangssignale bzw. Steuerbefehle an weitere Einheiten der Anlage bzw. Maschine, wie z.B. Frequenzumrichter, dezentrale Peripherie-Einheiten (z.B. so genannte ET200-Systeme der Firma Siemens) senden. Derartige Steuerbefehle können ebenfalls Veränderungen in der Anlage bzw. in der Maschine hervorrufen, welche neben bzw. zusätzlich zu den Ausgangssignalen der digitalen Ausgänge O1, ..., O4 und/oder der analogen Ausgänge der Steuereinheit SE für eine Unterscheidung von Betriebszuständen herangezogen werden können.

Weiterhin weist die Steuereinheit SE beispielhaft digitale Eingänge I1, I2, auf, über welche z.B. Signale und/oder Parameterwerte von Lasteinheiten - insbesondere Sensoreinheiten DS, AS - empfangen werden können. Über die an den Eingänge I1, I2 empfangenen Signale und/oder Parameterwerte kann der Steuereinheit SE ein aktuelles Geschehen in der Anlage oder Maschine vermittelt werden. Durch die an den Eingängen I1, I2 anliegenden Signale und/oder Parameterwerte können dann beispielsweise bestimmte Steuer- und Regelvorgänge ausgelöst werden. Die Steuereinheit SE kann auch analoge Eingänge für eine Anbindung und Abfrage von Sensoreinheiten bzw. deren Parameterwerten aufweisen.

Das beispielhafte Steuersystem umfasst weiterhin eine getaktete Stromversorgung SV, welche über eine Eingangsseite IN mit einer Spannungsversorgung U_{AC} (z.B. einer 3-phasigen Wechselspannung) verbunden ist. Die Stromversorgung SV weist beispielsweise acht Ausgänge und damit acht Ausgangskanäle A1, ..., A8 auf, an welche die Lastkreise des Steuersystems z.B. direkt angeschlossen sind und über welche die Lastkreise des Steuersystems der Anlage bzw. der Maschine mit einer Versorgungsspannung (z.B. 24 V Gleichspannung) bzw. mit einem Versorgungsstrom von der Stromversorgung SV versorgt werden. Die Stromversorgung SV kann beispielsweise die Möglichkeit bieten, wie z.B. die SITOP PSU8600 der Firma Siemens, dass für jeden Ausgangskanal A1, ..., A8 der Spannungswert der an den Lastkreis gelieferten Versorgungsspannung sowie der Strom individuell eingestellt und überwacht werden kann.

Alternativ kann das Steuersystem z.B. auch eine Stromversorgung SV aufweisen, an welche z.B. über eine externe Baugruppe (z.B. eine extern schaltbare Sicherungseinheit, etc.) mit zumindest zwei Ausgangszweigen angeschaltet ist, welche dann die zumindest zwei Ausgangskanäle A1, ..., A8 für die Stromversorgung SV bilden. Diese Ausgangszweige bzw. Ausgangskanäle A1, ..., A8 sind z.B. getrennt schaltbar und der Spannungswerte der an den Lastkreis gelieferte Versorgungsspannung wie der Strom kann individuell eingestellt und überwacht werden. Über die Ausgangskanäle A1, ..., A8 werden dann die jeweiligen Lastkreise bzw. die zu den Lastkreisen zugehörigen Lasteinheiten mit Strom bzw. Spannung versorgt.

Weiterhin können die Stromversorgung SV sowie die Steuereinheit SE des Steuersystems Schnittstellenmodule DV aufweisen, über welche eine z.B. bidirektionale Datenverbindung zum Übertragen von Steuerbefehlen oder -signalen und Dateninformationen hergestellt werden kann. Für die Datenverbindung kann beispielsweise Profinet (Process Field Network) - ein offener Industrie-Ethernet-Standard der PROFIBUS-Nutzerorganisation für die Automatisierung - verwendet werden. Zusätzlich kann beispielsweise die Datenverbindung DV dazu genutzt werden, um z.B. Daten, Informationen und/oder Messwerte an eine Auswerte- und/oder Datenverarbeitungseinheit AW zu übertragen. Diese Auswerte- und/oder Datenverarbeitungseinheit AW kann beispielsweise zentral ausgestaltet sein und z.B. Daten, Informationen und/oder Messwerte von mehreren Anlagen oder Maschinen bzw. deren Steuersystemen sammeln und verarbeiten.

Für eine Spannungsversorgung der Steuereinheit SE kann eine eigene Stromversorgung, welche in der Figur 1 nicht dargestellt ist, vorgesehen sein. Alternativ kann der Steuereinheit SE auch von der getakteten Stromversorgung SV des Steuersystems die entsprechende Versorgungsspannung zur Verfügung gestellt werden. Dazu könnte die Steuereinheit SE beispielweise an einen ersten Ausgangskanal A1 der Stromversorgung SV angebunden sein.

An die Ausgangskanäle A1, ..., A8 der Stromversorgung SV sind die Lastkreise des Steuersystems der Anlage bzw. Maschine angeschlossen, welche jeweils zumindest eine Lasteinheit - z.B. zumindest eine Aktor- bzw. Schalteinheit oder Sensoreinheit - aufweisen können. Bei dem in Figur 1 beispielhaft dargestellten Steuersystem sind beispielsweise am ersten Ausgangskanal A1 und an einem zweiten Ausgangskanal A2 Schalteinheiten S1, S2, S3, S4 sowie zugehörige Lastwiderstände R1, R2, R3, R4 angebunden, welche über die jeweilige Schalteinheit S1, S2, S3, S4 und durch entsprechende Ausgangssignale, welche an den jeweiligen digitalen Ausgänge O1, O2, O3, O4 der Steuereinheit SE anstehen, zu- oder weggeschalten werden können. An einen dritten und vierten Ausgangskanal A3, A4 sind ebenfalls als Lasteinheiten weitere Aktor- bzw. Schalteinheiten S5, S6 (z.B. Schütze, Magnetventile, Relais, etc.) z.B. zum Ein- bzw. Ausschalten eines elektrischen Ventils, eines Motors oder eines Moduls für eine Antriebssteuerung, etc. angebunden. Diese Aktor- bzw. Schalteinheiten S5, S6 können beispielsweise von der Steuereinheit SE des Steuersystems oder einer weiteren Steuereinheit beispielsweise mittels entsprechender Ausgangssignale angesteuert werden. An einem fünften Ausgangskanal A5 der Stromversorgung SV ist beispielsweise ein Lichtsignal LS sowie ein Motor M z.B. zum Betreiben einer Lüftereinheit angeschlossen. An einem sechsten Ausgangskanal A6 der Stromversorgung SV ist z.B. ein weiterer Lastwiderstand R5 angebunden. Auch diese Lasteinheiten können beispielsweise über analoge Ausgänge der Steuereinheit SE und entsprechende Ausgangssignale (z.B. Vorgabe eines Drehzahlwertes für den Motor M, Lichtsignal LS ein bzw. aus, etc.) angesteuert werden.

Von der Kombination der Ausgangssignale, welche von den digitalen Ausgängen O1, ..., O4 und den analogen Ausgängen der Steuereinheit SE zur Ansteuerung der jeweiligen Lasteinheiten in den jeweiligen Lastkreisen ausgegeben werden, wird dann der jeweilige Betriebszustand der Anlage bzw. Maschine im laufenden Betrieb (oder in einer Testphase durch ein Testprogramm) hervorgerufen. Je nach ein- bzw. zugeschalteten und/oder aus- bzw. weggeschalteten Lasteinheiten werden die jeweils zugehörigen Lastkreise von einem Versorgungsstrom durchflossen bzw. eine entsprechende Versorgungsspannung benötigt. Dieses Strom- und/oder Spannungswerte können dann am jeweiligen Ausgangskanal A1, ..., A6 des jeweiligen Lastkreises gemessen werden.

Weiterhin ist an den siebten und achten Ausgangskanal A7, A8 als Lasteinheit z.B. jeweils eine Sensoreinheit DS, AS angebunden, von welcher beispielsweise ein Signal und/oder Parameterwert an den entsprechenden digitalen Eingang I1, I2 der Steuereinheit SE geliefert wird. An den siebenten Ausgangskanal A7 ist beispielsweise ein Drucksensor DS angeschaltet, welcher ab Erreichen eines Schwellwerts ein Signal an den digitalen Eingang I2 der Steuereinheit SE meldet. An den achten Ausgangskanal A8 ist beispielsweise eine akustische Signaleinheit AS angebunden, welche während des Betriebs der Anlage bzw. Maschine ein Funktionssignal an den digitalen Eingang I1 der Steuereinheit SE abgibt. Die an den Eingängen I1, I2 im jeweiligen Betriebszustand anstehenden, aktuellen Signale, Parameterwerte, etc. (z.B. Werte von Temperatursensor, Drucksensoren, Drehzahlmessern, etc., Funktionssignale von Näherungssensoren, Lichtsignalen, Alarmsignalen, etc.) können zusätzlich in einem Betriebszustand erfasst und gemeinsam mit den aktuellen Strom- und Spannungswerten, welche für den jeweiligen Betriebszustand gemessen wurden, abgespeichert werden.

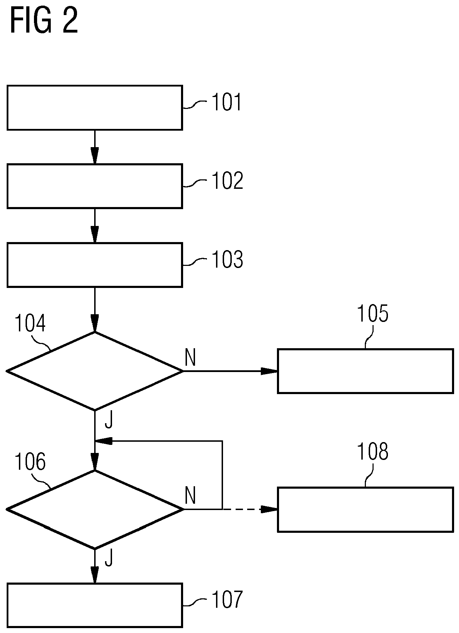

Die Figur 2 zeigt beispielhaft einen Ablauf des erfindungsgemäßen Verfahrens zum Überwachen einer betriebsmäßigen Funktionsweise eines Steuersystems bzw. der zugehörigen Lastkreise einer Anlage wie beispielhaft in Figur 1 dargestellt.

Bei der Durchführung des erfindungsgemäßen Verfahrens wird während des laufenden Betriebs der Anlage bzw. der Maschine oder während einer Testphase beim Durchlaufen des Testprogramms in einem Überwachungsschritt 101 festgestellt, dass der Betriebszustand des Steuersystems geändert wurde. D.h. bei zumindest einem Ausgangssignal der Steuereinheit SE, welche an den Ausgängen O1, ..., O4 der Steuereinheit SE anliegen, wurde der Wert verändert (z.B. einem digitalen Signal von 0 auf 1 oder von 1 auf 0), in zumindest einem Lastkreis zumindest eine Lasteinheit zu schalten bzw. anzusteuern. Durch die Veränderung des Betriebszustandes - insbesondere das Weg- oder Zuschalten einer Lasteinheit - kann es zu einer Veränderung beim Stromverbrauch bzw. bei der Versorgungsspannung im zugehörigen Lastkreis kommen.

In einem Messschritt 102 werden daher an den Ausgangskanälen A1, ..., A8, der Stromversorgung SV über welche die jeweiligen Lastkreise mit Strom und Spannung versorgt werden, die aktuellen Stromwerte und/oder Spannungswerte gemessen. Idealerweise kann zwischen der Änderung des Betriebszustandes und einer Messung der aktuellen Strom- und/oder Spannungswerte eine vorgegebene oder jeder Messung eine individuelle Wartezeit vorgesehen sein. Auf diese Weise werden Schwankungen bei Strom und/oder Spannung durch Einschwingvorgänge, welche beispielsweise durch Zu- oder Wegschalten einer Lasteinheit, etc. in einem Lastkreis entstehen können, nicht mitgemessen, sondern es werden möglichst statische bzw. konstante aktueller Strom- und/oder Spannungsmesswert gemessen. Weiterhin ist es möglich, eine Mittelwertbildung vor allem von Strommesswerten über eine vorgebbare Integrationszeit (z.B. 0,1 oder 10 Sekunden) oder eine andere mathematische Filterung für eine Reduktion von Stromschwankungen und/oder Rauschen bei der Ermittlung der aktuellen Strommesswerte vorzusehen. Die Filterungen können auch auf mehrere, in vorgegebener Reihenfolge vorgenommene Strommessungen erfolgen, um über einen vorgebbaren Zeitraum (z.B. 1 Minute) in vorgebbaren Abständen (z.B. alle 10 Sekunden) gefilterte Messwerte zu ermitteln und auf diese Weise einen Einschwingvorgangs einer Lasteinheit bzw. eines Verbrauchers beschreiben zu können.

In einem Speicherschritt 103 werden die aktuellen Stromund/oder Spannungsmesswerte abgespeichert, welche für den jeweils aktuellen Betriebszustand gemessen wurden. Gemeinsam mit den aktuellen Strom- und/oder Spannungsmesswerten wird auch der jeweils aktuelle Betriebszustand - d.h. die aktuelle Kombination der Ausgangssignale, welche an den Ausgängen O1, ..., 04 der Steuereinheit SE ansteht, - z.B. in einer Datenbank gespeichert. Die aktuellen Strom- und/oder Spannungsmesswerte können dabei gemeinsam mit dem jeweils aktuellen Betriebszustand der Strom- und/oder Spannungsmessung z.B. in der Steuereinheit SE des Steuersystems der Anlage gespeichert werden, wobei dann eine Auswertung der Messdaten bzw. die weiteren Verfahrensschritte beispielsweise von der Steuereinheit SE durchgeführt werden kann.

Alternativ oder zusätzlich können die aktuellen Stromund/oder Spannungsmesswerte sowie der zugehörige Betriebszustand an eine z.B. zentral verfügbare Auswerte- und/oder Datenverarbeitungseinheit AW über eine Datenverbindung DV übertragen und dort abgespeichert werden. Die Auswertung erfolgt dann beispielsweise ebenfalls durch die Auswerte- und/oder Datenverarbeitungseinheit AW. Vor der Übertragung der aktuellen Strom- und/oder Spannungsmesswerten und dem jeweiligen zugehörigen Betriebszustand kann von der Steuereinheit SE ein Startsignal an die Auswerte- und/oder Datenverarbeitungseinheit AW gesendet werden. Von der Steuereinheit SE kann der Auswerte- und/oder Datenverarbeitungseinheit AW damit z.B. eine stabile Messung der aktuellen Strom- und Spannungswerte an den Ausgangskanälen nach Änderung des Betriebszustand sowie ein Beginn der Datenübertragung mitgeteilt werden. Insbesondere bei eine so genannten Online-Auswertung kann das Startsignal der Auswerte- und/oder Datenverarbeitungseinheit AW auch den Start eines weiteren Auswertezyklus mitteilen. Idealerweise kann von der Auswerte- und/oder Datenverarbeitungseinheit AW ein Rücksignal an die Steuereinheit SE gesendet werden, wenn diese z.B. bereit für einen nächsten Auswertezyklus ist.

Zusätzlich können bei jeder Änderung des Betriebszustands im Messschritt 102 beispielsweise auch die Eingänge I1, I2 der Steuereinheit SE abgefragt und die dort eingehenden Signalund/oder Parameterwerte gemeinsam mit dem aktuellen Betriebszustand und den aktuellen Strom- und/oder Spannungswerten im Speicherschritt 103 z.B. in der Steuereinheit SE und/oder in der Auswerte- und Datenverarbeitungseinheit AW abgespeichert werden. Weiterhin können im Messschritt 102 auch aktuelle Werte von Umgebungs- und/oder Anlagenparametern, wie z.B. Temperaturwerte, Druckwerte, Drehzahlwerte, etc., ermittelt und im Speicherschritt 103 abgespeichert werden. Diese zusätzlichen Signal- und Parameterwerte bzw. Werte von Umgebungs- und/oder Anlagenparametern können dann in einem Vergleichsschritt 104 als so genannte Sekundärparameter für eine zusätzliche Filterung von Vergleichsdaten für die aktuellen Messwerte herangezogen werden.

Im Vergleichsschritt 104 werden dann die aktuellen Stromund/oder Spannungsmesswerte mit Strom- und/oder Spannungswerten verglichen, welche bei zumindest einer vorangegangenen Messung ermittelt wurden. Diese Strom- und/oder Spannungswerte, welche z.B. ebenfalls in der Steuereinheit SE und/oder in der Auswerte- und/oder Datenverarbeitungseinheit AW abgespeichert sein können, können z.B. an derselben Anlage bzw. am selben Steuersystem gemessen worden sein, wie die aktuellen Strom- und/oder Spannungsmesswerte. Alternativ können die Strom- und/oder Spannungswerte von vorangegangenen Messungen an bauartgleichen oder bauartähnlichen Anlagen bzw. Steuersystemen ermittelt worden sein - z.B. bei in Serie gefertigten Anlagen und/oder Maschinen. Insbesondere, wenn mehrere bauartgleiche oder bauartähnliche Anlagen bzw. Maschinen im Feld in Betrieb sind, kann auf diese Weise eine Vielzahl von Messdaten gesammelt werden.

Für den Vergleich der aktuellen Strom- und/oder Spannungsmesswerte mit Strom- und/oder Spannungswerten von zumindest einer vorangegangenen Messung muss im Vergleichsschritt 104 auch geprüft werden, ob die Strom- und/oder Spannungswerte der zumindest einen vorangegangenen Messung bei einem Betriebszustand bestimmt wurden, welcher mit dem Betriebszustand der aktuellen Strom- und/oder Spannungsmessdaten weitgehend übereinstimmt. Dazu kann beispielsweise für eine Bewertung einer Übereinstimmung des Betriebszustands der aktuellen Strom- und/oder Spannungsmessdaten mit dem Betriebszustand der Strom- und/oder Spannungswerten der zumindest einen vorangegangenen Messung eine maximal zulässige Abweichung vorgegeben werden. D.h. es wird überprüft, ob z.B. die Kombination der Ausgangssignale der Steuereinheit SE der aktuellen Messdaten mit zumindest einer der Ausgangssignalkombinationen, welche bei den für vorangegangene Messungen gespeicherten Daten hinterlegt worden sind, bis auf die maximal zulässige Abweichung übereinstimmt. Die maximal zulässige Abweichung des Betriebszustands kann z.B. von der Größe, Komplexität der Anlage bzw. des Steuersystems und/oder der Anzahl der möglichen Betriebszustände einer Anlage bzw. Maschine abhängen. Für komplexe Anlagen bzw. bei vielen möglichen Betriebszuständen können z.B. Abweichungen von einem oder mehreren Ausgangssignalen zulässig sein. Bei kleinen Anlagen bzw. bei wenigen möglichen Betriebszuständen kann z.B. eine genaue Übereinstimmung der Ausgangssignale gefordert werden.

Werden im Vergleichsschritt 104 keine Strom- und/oder Spannungswerte vorangegangener Messungen gefunden, welche einen Betriebszustand mit entsprechender Übereinstimmung mit dem Betriebszustand der aktuellen Strom- und Spannungsmesswerte aufweisen, so wird das Verfahren in einem Ausstiegsschritt 105 verlassen und im Überwachungsschritt 101 auf einen neuerlichen Wechsel des Betriebszustand der Anlage gewartet. Die aktuellen Strom- und Spannungsmesswerte bzw. der zugehörige Betriebszustand können beispielsweise beim Ausstiegsschritt 105 in der Datenbank als neuer Betriebszustand gekennzeichnet werden.

Werden im Vergleichsschritt 104 eine Vielzahl an Stromund/oder Spannungswerte vorangegangener Messungen gefunden, welche einen Betriebszustand mit entsprechender Übereinstimmung mit dem Betriebszustand der aktuellen Strom- und Spannungsmesswerte aufweisen, so können für eine zusätzliche Filterung der Strom- und/oder Spannungswerte vorangegangener Messungen die sogenannten Sekundärparameter herangezogen werden. D.h., die zu den jeweiligen Strom- und/oder Spannungswerten und zugehörigen Betriebszuständen ermittelten Werte von Signalen und/oder Parameter, welche an den Eingängen I1, I2 der Steuereinheit SE anliegen, bzw. ermittelte Werte von Umgebungs- und/oder Anlagenparametern werden mit den entsprechenden, bei den aktuellen Messwerten abgespeicherten Sekundärparameter auf eine möglichst große Übereinstimmung geprüft. Es werden dann jene Strom- und/oder Spannungswerte von vorangegangenen Messungen für den Vergleich mit den aktuellen Strom- und/oder Spannungsmesswerten genutzt, welche nicht nur den weitgehend gleichen Betriebszustand aufweisen, sondern auch bei möglichst gleichen bzw. sehr ähnlichen anlagentechnischen und/oder Umgebungsbedingungen bestimmt wurden.

Nachdem im Vergleichsschritt 104 jene Strom- und/oder Spannungswerte von vorangegangenen Messungen bestimmt wurden, welche für die aktuellen Strom- und/oder Spannungsmesswerte den am besten übereinstimmenden Betriebszustand und gegebenenfalls die am besten passenden Sekundärparameter aufweisen, werden die aktuellen Strom- und/oder Spannungsmesswerte mit diesen Strom- und/oder Spannungswerte verglichen. D.h. es werden jene Strom- und/oder Spannungswerte von vorangegangenen Messungen gesucht, welche beim zugehörigen Betriebszustand und gegebenenfalls bei den Sekundärparametern die geringsten Abweichungen zum Betriebszustand und gegebenenfalls den Sekundärparametern des aktuellen Strom- und/oder Spannungsmesswerte aufweisen. In einem Prüfschritt 106 wird dann geprüft, ob vom Vergleich zwischen den aktuellen Stromund/oder Spannungsmesswerten mit den Strom- und/oder Spannungswerten von zumindest einer vorangegangenen Messung beim entsprechenden Betriebszustand der Anlage bzw. des Steuersystem ein vorgegebener Toleranzbereich eingehalten bzw. überschritten wird.

Der vorgegebene Toleranzbereich kann dabei z.B. in Form eines Prozentsatzes oder in Form eines Absolutbereichs angegeben sein. Es kann dabei beispielsweise ein Toleranzbereich für alle Lastkreise der Anlage bzw. Maschine bzw. für alle Messwerte (z.B. Strom, Spannung) vorgesehen werden. Es ist allerdings auch möglich, lastkreisspezifisch individuell Toleranzbereiche vorzugeben oder Toleranzbereiche für z.B. gleich oder ähnlich ausgeführte Lastkreise vorzusehen, welche z.B. anhand der Ausgangskanäle A1, ..., A8 ausgewählt werden können, an welche die jeweiligen Strom- und/oder Spannungswerte ermittelt wurden. Weiterhin kann der Toleranzbereich angepasst werden, wenn z.B. im Laufe des erfindungsgemäßen Verfahren bzw. bei mehrmaliger Anwendung erkannt wird, dass der vorgegebene Toleranzbereich z.B. zu eng oder zu weit gewählt worden ist. Durch einen z.B. zu eng gewählten Toleranzbereich können beispielsweise durch Schwankungen in Lastkreisen und/oder z.B. Alterserscheinungen von Lasteinheiten Pseudofehler produziert werden. D.h. es wird trotz korrekter Anlagenfunktion in einem Lastkreis ein Fehler angezeigt. Bei einem zu weit gewählten Toleranzbereich können beispielsweise tatsächlich vorliegende Funktionsfehler von Lasteinheiten übersehen werden. Eine Anpassung des vorgegebenen Toleranzbereichs kann beispielsweise auf Basis von zu verschiedenen Zeitpunkten abgespeicherten Strom- und/oder Spannungsmesswerten vorgenommen werden.

Wird im Prüfschritt 106 festgestellt, dass vom Vergleich zwischen den aktuellen Strom- und/oder Spannungsmesswerten mit den Strom- und/oder Spannungswerten von zumindest einer vorangegangenen Messung für den jeweiligen Betriebszustand der vorgegebene Toleranzbereich nicht eingehalten wird, so wird in einem Anzeigeschritt 107 der zumindest eine Lastkreis angezeigt, bei welchem im Betriebszustand der aktuellen Stromund/oder Spannungsmesswerte der Toleranzbereich verlassen wird. D.h. anhand des jeweiligen Ausgangskanals A1, ..., A8, an welchem der jeweilige Strom- und/oder Spannungswert gemessen wurden, welcher eine signifikante Abweichung von entsprechenden früheren Messwerten zeigt, kann beispielsweise der jeweils betroffene Lastkreis ermittelt und dann angezeigt werden. Die Anzeige des jeweiligen Lastkreises kann z.B. über die Steuereinheit SE erfolgen. Dazu kann beispielsweise eine der Steuereinheit SE zugeordnete Anzeigeeinheit (z.B. Display, mobile Anzeigeeinheit, etc.) verwendet werden.

Bei Durchführung des Prüfschrittes 106 auf einer Auswerteund/oder Datenverarbeitungseinheit AW kann die Anzeige des jeweiligen Lastkreises im Anzeigeschritt 107 beispielsweise über eine Ausgabeeinheit der Auswerte- und/oder Datenverarbeitungseinheit AW erfolgen. Dabei können z.B. die aktuellen Messwerte von Strom und/oder Spannung bzw. Strom- und/oder Spannungswerten vorangegangener Messungen graphisch aufbereitet werden - beispielsweise in Form von Tabellen, Kurven, etc. - und z.B. in Vergleich mit den aktuellen Stromund/oder Spannungsmesswerten gesetzt werden.

An einem Lastkreis können beispielsweise auch mehrere Lasteinheiten bzw. Verbraucher (wie z.B. in der Figur 1 bei den Lastkreisen, welche am ersten, zweiten und fünften Ausgangskanal A1, A2, A5 angeschlossen sind) angeschlossen sein. Diese Lasteinheiten können bei Änderung der Betriebszustände von der Steuereinheit SE z.B. zumindest teilweise ein-/zu- bzw. aus-/weggeschalten werden oder in ihrem Betriebsverhalten verändert werden (z.B. Änderung der Drehzahl des Motors M). Dadurch kann es zumindest bei einem dieser Lasteinheiten oder Verbraucher zu einer Änderung des Stromverbrauchs kommen. Durch die Messung der aktuellen Strom- und/oder Spannungsmesswerte für die jeweiligen Betriebszustände, welche für diesen Lastkreis bzw. den zugehörigen Ausgangskanal A1, A2, A5 durchlaufen werden können, können z.B. im Prüfschritt 106 jene Betriebszustände ermittelt werden, bei welchen in diesem Lastkreis der Toleranzbereich verlassen bzw. überschritten wurde. Im Anzeigeschritt 107 können dann beispielsweise auch der bzw. die entsprechenden Betriebszustände ausgegeben werden, bei welchen ein Verlassen bzw. Überschreiten des Toleranzbereichs festgestellt wurden. In einer weiteren Auswertung der aktuellen Strom- und/oder Spannungsmesswerte dieser Betriebszustände und einer Ermittlung der in diesen Betriebszuständen aktiven bzw. eingeschalteten Lasteinheiten kann beispielsweise auch jene Lasteinheit bzw. jene Lasteinheiten eruiert werden, welche das Verlassen bzw. Überschreiten des Toleranzbereiches in den jeweiligen Betriebszuständen ausgelöst hat bzw. haben. Damit kann eine Ursache für das Verlassen bzw. Überschreiten des Toleranzbereichs zumindest auf eine kleine Zahl an Lasteinheiten bzw. Verbraucher eingeschränkt werden. Idealerweise wird die verursachende Lasteinheit damit gefunden.

Wird im Prüfschritt 106 kein Verlassen (d.h. betragsmäßiges oder prozentuelles Überschreiten oder Über-/Unterschreiten) des vorgegebenen Toleranzbereichs durch den Vergleich zwischen den aktuellen Messwerten von Strom und/oder Spannung mit Strom- und/oder Spannungswerten von zumindest einer früheren Messung festgestellt, so wird das erfindungsgemäße Verfahren mit einem Abschlussschritt 108 beendet. Im Abschlussschritt 108 kann z.B. ausgegeben werden, dass keine Auffälligkeiten bei den geprüften Lastkreisen der Anlage bzw. Maschine festgestellt werden konnten.

Weiterhin wird angemerkt, dass das erfindungsgemäße Verfahren nicht nur bei getakteten Stromversorgungen SV eingesetzt werden kann, von welchen eine eingangsseitig angelegte Wechselspannung in eine konstante Ausgangsgleichspannung umgesetzt wird. Das erfindungsgemäße Verfahren kann z.B. auch bei geregelten Spannungsversorgungen für Wechselstrom-Lasteinheiten und damit für einen großen Bereich von Verbrauchern zur Überprüfung einer korrekten Verdrahtung bzw. Funktionsweise dieser Lasteinheiten angewendet werden.

## Patentansprüche

1. Verfahren zum Überwachen einer betriebsmäßigen Funktionsweise eines Steuersystems einer Anlage, wobei das Steuersystem neben zumindest zwei Lastkreisen zumindest eine Steuereinheit (SE) sowie eine getaktete Stromversorgung (SV) umfasst, von welcher die zumindest zwei Lastkreise mit zumindest jeweils einer Lasteinheit über zumindest zwei Ausgangskanäle (A1, ..., A8) mit einer Versorgungsspannung und/oder einem Versorgungsstrom versorgt werden, und wobei vom Steuersystem während einer betriebsmäßigen Funktionsweise unterschiedliche Betriebszustände angenommen werden, wobei ein Betriebszustand durch eine Kombination von Ausgangssignalen der Steuereinheit (SE) herbeigeführt wird, ***gekennzeichnet durch folgende Schritte:***
- Feststellen einer Änderung des Betriebszustands des Steuersystems (101);
- Messen der jeweils aktuellen Strom- und/oder Spannungswerte an den zumindest zwei Ausgangskanälen (A1, ..., A8) für die jeweils zugehörigen Lastkreise (102);
- Abspeichern der aktuellen Strom- und/oder Spannungsmesswerte gemeinsam mit dem jeweiligen Betriebszustand des Steuersystems (103);
- Vergleichen der aktuellen Strom- und/oder Spannungsmesswerte mit Strom- und/oder Spannungswerten zumindest einer vorangegangenen Messung (104), wobei nur Stromund/oder Spannungswerte zumindest einer vorangegangenen Messung herangezogen werden, deren jeweiliger Betriebszustand eine Übereinstimmung mit dem jeweiligen Betriebszustand der aktuellen Strom- und/oder Spannungsmesswerte aufweisen;
- Prüfen (106), ob vom Vergleich der aktuellen Stromund/oder Spannungsmesswerte mit den Strom- und/oder Spannungswerten der zumindest einen vorangegangenen Messung ein vorgegebener Toleranzbereich verlassen wird;
- und Anzeigen des jeweiligen Lastkreises (107), bei welchem im jeweiligen Betriebszustand der aktuellen Stromund/oder Spannungsmesswerte der vorgegebene Toleranzbereich verlassen wird.

2. Verfahren nach Anspruch 1, ***dadurch gekennzeichnet, dass*** weiterhin zu den aktuellen Strom- und/oder Spannungsmesswerten des jeweiligen Betriebszustandes jeweils aktuelle Werte von Parametern und/oder Signalen an Signaleingängen (I1, I2) der Steuereinheit (SE) und/oder aktuelle Werte von Umgebungs- und Anlagenparametern erfasst und abgespeichert werden (102, 103).

3. Verfahren nach einem der Ansprüche 1 und 2, ***dadurch gekennzeichnet, dass*** für eine Bewertung der Übereinstimmung zwischen dem jeweiligen Betriebszustand der aktuellen Strom- und/oder Spannungsmesswerte und dem Betriebszustand der Strom- und/oder Spannungswerte zumindest einer vorangegangenen Messung eine maximal zulässige Abweichung vorgegeben wird (104).

4. Verfahren nach einem der vorangegangen Ansprüche, ***dadurch gekennzeichnet, dass*** der vorgegebene Toleranzbereich für den Vergleich der aktuellen Strom- und/oder Spannungsmesswerte mit den Strom- und/oder Spannungswerten zumindest einer vorangegangenen Messung beim jeweiligen Betriebszustand anpassbar ausgestaltet wird (106).

5. Verfahren nach einem der vorangegangenen Ansprüche,
***dadurch gekennzeichnet, dass*** nach Feststellen der Änderung des Betriebszustands vor der Messung der jeweils aktuellen Strom- und/oder Spannungswerte an den zumindest zwei Ausgangskanälen eine vorgebbare Wartezeit vorgesehen wird (102).

6. Verfahren nach einem der vorangegangenen Ansprüche,
***dadurch gekennzeichnet, dass*** nach Feststellen der Änderung des Betriebszustand der jeweils aktuelle Stromwert an den zumindest zwei Ausgangskanälen in vorgebbaren Abständen innerhalb eines vorgebbaren Zeitraums gemessen wird, und dass aus den im vorgebbaren Zeitraum gemessenen Stromwerten als aktueller Strommesswert für den jeweiligen Betriebszustand ein Mittelwert gebildet wird (102).

7. Verfahren nach einem der Ansprüche 1 bis 6, ***dadurch gekennzeichnet, dass*** die Strom- und/oder Spannungswerte der zumindest einen vorangegangenen Messung an derselben Anlage bzw. am selben Steuersystems gemessen werden (102), wie die aktuellen Strom- und/oder Spannungsmesswerte.

8. Verfahren nach einem der Ansprüche 1 bis 6, ***dadurch gekennzeichnet, dass*** die Strom- und/oder Spannungswerte der zumindest einen vorangegangenen Messung auf einer bauartgleichen oder bauartähnlichen Anlage bzw. einem bauartgleichen oder bauartähnlichen Steuersystem gemessen werden (102).

9. Verfahren nach einem der Ansprüche 1 oder 8, ***dadurch gekennzeichnet, dass*** die gemessenen Strom- und/oder Spannungswerte mit den jeweils zugehörigen Betriebszuständen in der Steuereinheit (SE) hinterlegt werden (103).

10. Verfahren nach einem der Ansprüche 1 bis 8, ***dadurch gekennzeichnet, dass*** die gemessenen Strom- und/oder Spannungswerte mit den jeweils zugehörigen Betriebszuständen an eine Auswerte- und/oder Datenverarbeitungseinheit übertragen und dort abgespeichert werden (103).

11. Verfahren nach Anspruch 10, ***dadurch gekennzeichnet, dass***
vor einer Übertragung von aktuellen Strom- und/oder Spannungsmesswerten mit dem jeweils zugehörigen Betriebszustand von der Steuereinheit (SE) ein Startsignal an die Auswerte- und/oder Datenverarbeitungseinheit (AW) gesendet wird (103).

12. Verfahren nach einem der Ansprüche 10 oder 11, ***dadurch***
***gekennzeichnet, dass*** von der Auswerte- und/oder Datenverarbeitungseinheit (AW) ein Rücksignal an die Steuereinheit (SE) gesendet wird (103).

13. Verfahren nach einem der vorangegangenen Ansprüche,
***dadurch gekennzeichnet, dass*** die Schritte des Verfahrens während des laufenden Betriebs der Anlage durchlaufen werden.

14. Verfahren nach einem der Ansprüche 1 bis 12, ***dadurch gekennzeichnet, dass*** die Schritte des Verfahrens in einer Testphase in Form eines Testprogramms durchlaufen werden, wobei zum Messen der aktuellen Strom- und/oder Spannungsmesswerte vorgegebene Betriebszustände hervorgerufen werden.

## Claims

1. Method for monitoring an operationally correct functioning of a plant control system, wherein the control system comprises, in addition to at least two load circuits, at least one control unit (SE) as well as a clocked power supply (SV) by which the at least two load circuits, each having at least one load unit, are supplied with a supply voltage and/or a supply current via at least two output channels (A1, ..., A8), and wherein different operating states are assumed by the control system while the latter is functioning in an operationally correct manner, wherein an operating state is brought about by a combination of output signals of the control unit (SE), ***characterised by the following steps:***
- detecting a change in the operating state of the control system (101);
- measuring the respective latest current and/or voltage values at each of the at least two output channels (A1, ..., A8) for the respective associated load circuits (102);
- storing the latest recorded current and/or voltage measurement values together with the respective operating state of the control system (103);
- comparing the latest recorded current and/or voltage measurement values with current and/or voltage values of at least one preceding measurement (104), wherein recourse is had only to current and/or voltage values of at least one preceding measurement whose respective operating state reveals a correspondence with the respective operating state of the latest recorded current and/or voltage measurement values;
- checking (106) whether a predefined tolerance range is exited based on the comparison of the latest recorded current and/or voltage measurement values with the current and/or voltage values of the at least one preceding measurement;
- and displaying the respective load circuit (107) in which the predefined tolerance range is exited in the respective operating state of the latest recorded current and/or voltage measurement values.

2. Method according to claim 1, ***characterised in that*** respective latest values of parameters and/or signals at signal inputs (II, 12) of the control unit (SE) and/or latest values of environmental and plant parameters are acquired and stored (102, 103) in addition to the latest recorded current and/or voltage measurement values of the respective operating state.

3. Method according to one of claims 1 and 2, ***characterised in that*** a maximum permissible deviation is predefined (104) for an assessment of the correspondence between the respective operating state of the latest recorded current and/or voltage measurement values and the operating state of the current and/or voltage values of at least one preceding measurement.

4. Method according to one of the preceding claims, ***characterised in that*** the predefined tolerance range for the comparison of the latest recorded current and/or voltage measurement values with the current and/or voltage values of at least one preceding measurement in the respective operating state is embodied as adjustable (106).

5. Method according to one of the preceding claims, ***characterised in that*** following detection of the change in operating state, a predefinable waiting time is provided (102) prior to the measurement of the respective latest current and/or voltage values at the at least two output channels.

6. Method according to one of the preceding claims, ***characterised in that*** following detection of the change in operating state, the respective latest current value is measured at the at least two output channels at predefinable intervals within a predefinable time period, and that an average value is formed (102) from the current values measured in the predefinable time period as the latest recorded current measurement value for the respective operating state.

7. Method according to one of claims 1 to 6, ***characterised in that*** the current and/or voltage values of the at least one preceding measurement are measured (102) on the same plant or on the same control system as the latest recorded current and/or voltage measurement values.

8. Method according to one of claims 1 to 6, ***characterised in that*** the current and/or voltage values of the at least one preceding measurement are measured (102) on a plant of identical or similar design or on a control system of identical or similar design.

9. Method according to one of claims 1 or 8, ***characterised in that*** the measured current and/or voltage values are stored (103) in the control unit (SE) together with the respective associated operating states.

10. Method according to one of claims 1 to 8, ***characterised in***
***that*** the measured current and/or voltage values are transferred to an evaluation and/or data processing unit together with the respective associated operating states and stored therein (103).

11. Method according to claim 10, ***characterised in that*** a start
signal is sent (103) to the evaluation and/or data processing unit (AW) by the control unit (SE) prior to a transfer of the latest recorded current and/or voltage measurement values together with the respective associated operating state.

12. Method according to one of claims 10 or 11, ***characterised***
***in that*** a return signal is sent (103) to the control unit (SE) by the evaluation and/or data processing unit (AW).

13. Method according to one of the preceding claims,
***characterised in that*** the steps of the method are performed during the ongoing operation of the plant.

14. Method according to one of claims 1 to 12, ***characterised in***
***that*** the steps of the method are performed in a test phase in the form of a test program, wherein predefined operating states are invoked for the purpose of measuring the latest current and/or voltage measurement values.

## Revendications

1. Procédé de contrôle d'un mode de fonctionnement opérationnel d'un système de commande d'une installation, le système de commande comprenant, à côté d'au moins deux circuits de charge, au moins une unité de commande (SE) ainsi qu'une unité d'alimentation en courant cadencée (SV), à partir de laquelle les au moins deux circuits de charge comprenant au moins une unité de charge chacune sont alimentés en courant en une tension d'alimentation et/ou un courant d'alimentation via au moins deux canaux de sortie (A1, ..., A8), et dans lequel le système de commande adopte différents états de fonctionnement pendant un mode de fonctionnement opérationnel, un état de fonctionnement étant provoqué par une combinaison de signaux de sortie de l'unité de commande (SE), **caractérisé par** les étapes suivantes :
- constat d'une modification de l'état de service du système de commande (101) ;
- mesurage des valeurs de courant et/ou de tension actuelles correspondantes sur les au moins deux canaux de sortie (A1, ..., A8) pour les circuits de charge associés correspondants (102) ;
- mise en mémoire des valeurs de courant et/ou de tension actuelles mesurées, ensemble avec l'état de service correspondant du système de commande (103) ;
- comparaison des valeurs de mesure de courant et/ou de tension actuelles mesurées avec des valeurs de courant et/ou de tension d'au moins une mesure (104) précédente, étape pour laquelle seules les valeurs de courant et/ou de tension d'au moins une mesure précédente étant retenues dont l'état de service correspondant correspond à l'état de service correspondant des valeurs de courant et/ou de tension actuelles mesurées ;
- vérifier (106) si la comparaison des valeurs actuelles de courant et/ou de tension avec les valeurs de courant et/ou de tension de l'au moins une mesure précédente, mène au dépassement d'une plage de tolérance prédéfinie ;
- et affichage du circuit de charge (107) correspondant pour lequel, dans l'état de service correspondant des valeurs de courant et/ou de tension actuelles mesurées, un dépassement de la plage de tolérance prédéfinie a été constaté.

2. Procédé selon la revendication 1, **caractérisé en ce que** par ailleurs, pour les valeurs de courant et/ou de tension actuelles mesurées de l'état de service correspondant, des valeurs actuelles chacune de paramètres et/ou de signaux à des entrées de signaux (I1, I2) de l'unité de commande (SE) et/ou des valeurs actuelles de paramètres environnementaux et systémiques sont relevées et stockées (102, 103).

3. Procédé selon l'une des revendications 1 et 2, **caractérisé en ce que**, pour évaluer la correspondance de l'état de service correspondant des valeurs de mesure de courant et/ou de tension actuelles et l'état de service des valeurs de courant et/ou de tension d'au moins une mesure précédente, il y a prédéfinition d'un écart maximum admissible (104).

4. Procédé selon l'une des revendications précédentes, **caractérisé en ce que** la plage de tolérance prédéfinie est prévue de telle manière qu'elle puisse être adaptée pour la comparaison des valeurs de mesure de courant et/ou de tension actuelles avec les valeurs de courant et/ou de tension d'au moins une mesure précédente pour l'état de service correspondant.

5. Procédé selon l'une des revendications précédentes, **caractérisé en ce que**, après constat de la modification de l'état de service, un temps d'attente susceptible prédéfinissable est prévu (102) avant le mesurage des valeurs de courant et/ou de tension actuelles correspondantes sur les au moins deux canaux de sortie.

6. Procédé selon l'une des revendications précédentes, **caractérisé en ce que**, après constat de la modification de l'état de service, la valeur de courant actuelle correspondante est mesurée sur les au moins deux canaux de sortie dans des intervalles prédéfinissables pendant une période prédéfinissable, et **en ce qu'**une valeur moyenne est calculée (102) sur la base des valeurs de courant mesurées pendant la période prédéfinissable en tant que valeur de courant actuelle pour l'état de service correspondant.

7. Procédé selon l'une des revendications 1 à 6, **caractérisé en ce que** les valeurs de courant et/ou de tension de l'au moins une mesure précédente sont mesurées (102) sur la même installation respectivement le même système de commande que les valeurs de mesure de courant et/ou de tension actuelles.

8. Procédé selon l'une des revendications 1 à 6, **caractérisé en ce que** les valeurs de courant et/ou de tension de l'au moins une mesure précédente sont mesurées sur une installation ou un système de commande de même type ou de type similaire (102).

9. Procédé selon l'une des revendications 1 ou 8, **caractérisé en ce que** les valeurs de courant et/ou de tension mesurées sont enregistrées (103)dans l'unité de commande (SE) ensemble avec les états de service associés correspondants.

10. Procédé selon l'une des revendications 1 à 8, **caractérisé en ce que** les valeurs de courant et/ou de tension mesurées sont transmises, ensemble avec les états de service associés correspondants, à une unité de dépouillement et/ou de traitement des données pour y être stockées (103).

11. Procédé selon la revendication 10, **caractérisé en ce que**, avant une transmission de valeurs de courant et/ou de tension actuelles mesurées ensemble avec l'état de service associé correspondant par l'unité de commande (SE), un signal de démarrage est émis (103) à l'unité de dépouillement et/ou de traitement des données (AW).

12. Procédé selon l'une des revendications 10 ou 11, **caractérisé en ce qu'** un signal de retour est émis (103) à l'unité de commande (SE) par l'unité de dépouillement et/ou de traitement des données (AW).

13. Procédé selon l'une des revendications précédentes, **caractérisé en ce que** les étapes du procédé sont exécutées pendant le fonctionnement de l'installation en cours.

14. Procédé selon l'une des revendications 1 à 12, **caractérisé en ce que** les étapes du procédé sont exécutées sous forme d'un programme d'essai pendant une période d'essai, des états de service prédéfinis étant provoqués pour le mesurage des valeurs de courant et/ou de tension actuelles à mesurer.
